**Europäisches Patentamt**

**European Patent Office**

**Office européen des brevets**

(19)

(11) Veröffentlichungsnummer : **0 609 290 B1**

(12)

# EUROPÄISCHE PATENTSCHRIFT

(45) Veröffentlichungstag der Patentschrift :
**05.07.95 Patentblatt 95/27**

(51) Int. Cl.$^6$: **G11B 27/34**, G11B 33/10,
G11B 23/30, G11B 15/02,
G11B 27/11

(21) Anmeldenummer : **92921404.7**

(22) Anmeldetag : **16.10.92**

(86) Internationale Anmeldenummer :
**PCT/EP92/02389**

(87) Internationale Veröffentlichungsnummer :
**WO 93/08571 29.04.93 Gazette 93/11**

---

(54) **LESEGERÄT FÜR EINEN STATISCHEN SPEICHER EINER KASSETTE.**

---

(30) Priorität : **26.10.91 DE 4135371**

(43) Veröffentlichungstag der Anmeldung :
**10.08.94 Patentblatt 94/32**

(45) Bekanntmachung des Hinweises auf die
Patenterteilung :
**05.07.95 Patentblatt 95/27**

(84) Benannte Vertragsstaaten :
**AT DE ES FR GB IT SE**

(56) Entgegenhaltungen :
**EP-A- 0 400 221
WO-A-84/03791
WO-A-89/10615
WO-A-91/02355**

(56) Entgegenhaltungen :
**DE-A- 3 435 506
GB-A- 2 231 695
US-A- 4 426 684
PATENT ABSTRACTS OF JAPAN vol. 12, no.
175 (P-707)25. Mai 1988 & JP,A,62 285 289
PATENT ABSTRACTS OF JAPAN vol. 9, no. 86
(P-349)(1809) 16. April 1985 & JP,A,89 215 087**

(73) Patentinhaber : **DEUTSCHE
THOMSON-BRANDT GMBH
Hermann-Schwer-Strasse 3
D-78048 Villingen-Schwenningen (DE)**

(72) Erfinder : **PLATTE, Hans-Joachim
Königsberger Weg 22
D-3005 Hemmingen 4 (DE)**
Erfinder : **SCHRÖDER, Ernst, F.
Pinkenburger Str. 25D
D-3000 Hannover 51 (DE)**

---

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Lesegerät gemäß dem Oberbegriff des Anspruchs 1. Ein derartiges Lesegerät ist bekannt durch die DE-A-29 43 409 und DE-A- 34 35 506. Eine derartige Kassette mit einem statischen Speicher hat den Vorteil, daß eine große Menge von Kennwerten des Magnetbandes mühelos gespeichert, gelöscht und ersetzt werden kann. Insbesondere entfällt eine schriftliche Archivierung, die ohnehin bei kleineren Kassetten nicht mehr in ausreichendem Maße möglich ist. Das Lesen der in dem Speicher der Kassetten enthaltenen Daten erfolgt mit dem Recorder, in den die Kassette bei der Aufnahme oder Wiedergabe eingelegt oder eingeschoben wird.

Der Erfindung liegt die Aufgabe zugrunde, ein neuartiges Lesegerät der beschriebenen Art zu schaffen, das zusätzliche Anwendungsgebiete erschließt und insbesondere für künftige geometrisch kleine Kassetten für die digitale Videoaufzeichnung geeignet ist.

Diese Aufgabe wird durch die im Anspruch 1 angegebene Erfindung gelöst. Vorteilhafte Weiterbildungen der Erfindung sind in den Unteransprüchen angegeben.

Während bei dem bekannten Recorder für eine solche Kassette durch den Speicher der Kassette im wesentlichen nur eine automatische Steuerung der Recorders erfolgt, geht das erfindungsgemäße Lesegerät über die reine Steuerung des Recorders hinaus. Während bislang das Lesen des Speichers der Kassette nur in dem Recorder erfolgte, wird bei dem erfindungsgemäßen Lesegerät eine Auswertung der Kassette unabhängig vom Recorder ermöglicht. Da das Magnetband nicht mehr ausgewertet wird und im wesentlichen nur die Daten des Speichers wiedergegeben werden müssen, ergibt sich eine besonders kleine Einheit, die dennoch alle an der Kassette gespeicherten Daten wiedergeben kann. Ein besonderer Vorteil ergibt sich bei künftigen kleinen Kassetten für die digitale Videoaufzeichnung, weil bei derartigen Kassetten auf dem Kassettengehäuse selbst für eine schriftliche Archivierung kein ausreichender Platz mehr vorhanden und nur noch die Skizzierung kurzer Stichworte möglich ist. Besonders vorteilhaft ist das erfindungsgemäße Lesegerät in Zusammenhang mit Camcordern, da es ihm die Führung einer schriftlichen Liste über die aufgenommenen Szenen erspart. Das Gerät benötigt zusätzlich zu den bekannten elektrischen Baugruppen eines Taschenrechners wie Batterie, Solarzelle, Display, Tasten, Mikroprozessor und Ein/Ausschalter lediglich Verbindungsmittel zu dem elektronischen Speicher in der Magnetbandkassette. Diese Verbindungsmittel bestehen im einfachsten Fall aus einem Satz von Kontakten. Das Lesegerät kann vorzugsweise in der Größe einer Scheckkarte ausgebildet sein und ist daher ein leicht handhabbares und bequem transportierbares Gerät.

Das auf dem Konzept der elektronischen Speicher in der Kassette beruhende Band-Inhalt-Management kann z.B. wie folgt arbeiten. Mit dem Beginn eines jeden Aufnahmevorganges, ausgelöst durch die Betätigung der Aufnahme-Start-Taste, wird automatisch ein Dateneintrag in den elektronischen Speicher der Kassette vorgenommen, die z.B. die folgende Information umfaßt:

- Aufnahmedatum (z.B. aus Uhr-Camcorder),
- Aufnahme-Startzeit (z.B. ebenfalls aus Uhr im Camcorder),
- Bandstand bei Aufnahmebeginn,
- Bandstand bei Aufnahmeende,
- Textblock mit Titel, falls schon vorhanden, bzw. für nachträgliche Titeleinfügung.

Das Gerät bietet dem Benutzer eine hilfreiche und weit über die heutigen Camcorder-Möglichkeiten hinausgehende Unterstützung beim Sammeln, Editieren und Archivieren seiner Eigenaufnahmen. Die Erfindung baut auf einer entsprechenden Nutzung einer elektronischen Speichereinrichtung in einer Magnetbandkassette auf. Vorzugsweise ist das erfindungsgemäße Lesegerät in eine Fernbedienung für einen Recorder oder einen Fernsehempfänger integriert. Eine weitere Ausführungsform des Lesegerätes könnte auch noch elektronische Zusatzeinrichtungen zum Editieren des Speicherinhaltes beinhalten. Dabei bezeichnet "Editieren" gezielte Änderung des Speicherinhaltes, z.B. durch Hinzufügen oder Ändern der in der letzten Spalte in der obigen Tabelle angegebenen Benutzer-definierten Titel. Das Lesegerät würde in seiner einfachsten Ausführrung den Inhalt eines Speichers in der Magnetbandkassette lesen, ihn zeilenweise anzeigen, dem Benutzer über eine besondere Tastatur die Möglichkeit der alphanumerischen Zeicheneingabe erlauben, und nach Abschluß des Editiervorganges den vom Benutzer geänderten Speicherinhalt wieder in den Speicher der Kassette zurückschreiben. Das Lesegerät kann so ausgebildet sein, daß die Dateninhalte der elektronischen Speichereinrichtung mehrerer Kassetten gleichzeitig gespeichert werden können, so daß programmbezogene Suchoperationen über mehrere Kassetten hinweg durchgeführt werden können.Bei einer VPT-Aufnahme könnte automatisch der Titel der Sendung in den Speicher der Kassette übernommen werden.

Die Erfindung wird im folgenden Anhand der Zeichnung an mehreren Ausführungsbespielen erläutert. Darin zeigen

Fig. 1 in vereinfachter Form das erfindungsgemäße Gerät mit einer Kassette,

Fig. 2 die Anordnung der Kassette an der Einheit,

Fig. 3    eine andere Ausbildung von Fig. 2,

Fig. 4    die Kombination der erfindungsgemäßen Einheit mit einer Fernbedienung und

Fig. 5    eine besondere Ausbildung der die Signalübertragung ermöglichenden Kontakte an der Einheit und an der Kassette.

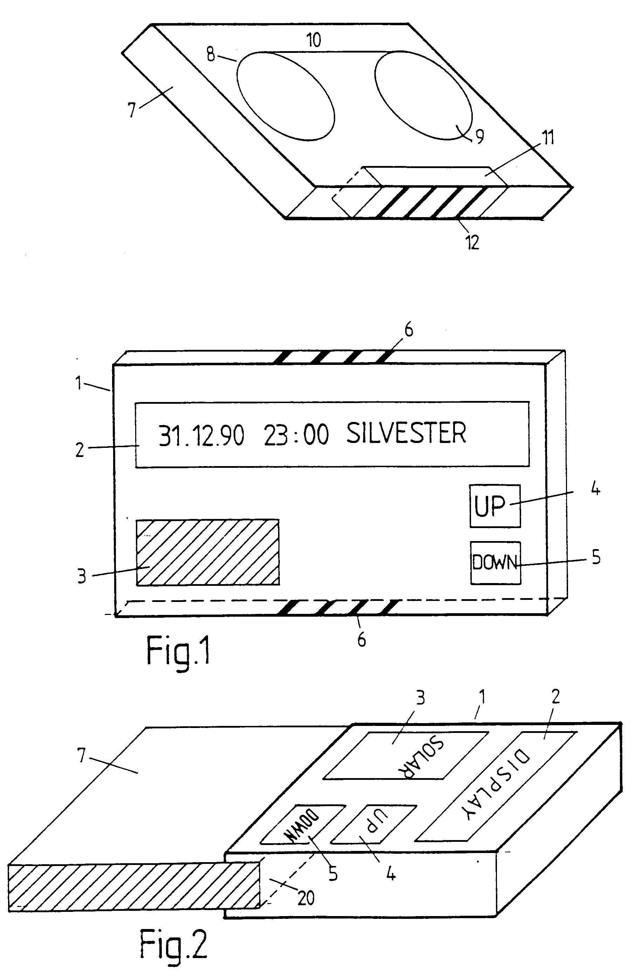

Das Lesegerät gemäß Fig. 1 besteht aus einer scheckkartengroßen Einheit 1 mit dem Anzeigefeld 2, der Solarzelle 3, der UP-Taste 4, der Down-Taste 5 und den an der oberen Seite angeordneten Kontakten 6. Die Kassette 7, die in üblicher Weise zwei Wickelteller 8, 9 für das Magnetband 10 trägt, ist zusätzlich mit dem Speicher 11 versehen, dessen Aus- und Eingänge mit an der Seitenfläche liegenden, zugänglichen Kontakten 12 verbunden sind. In dem Speicher 11 sind während eines Aufnahmevorganges oder eines Suchlaufes Kennwerte des Magnetbandes 10 wie z.B. Bandstand, Titel und dgl. gespeichert. Die Kassette 7 ist an der Einheit 1 derart anbringbar, daß die Kontakte 12 an der Kassette 7 mit den Kontakten 6 an der Einheit 1 in Verbindung gelangen. Durch die in der Einheit 1 enthaltene Elektronik können dann die in dem Speicher 11 gespeicherten Werte abgerufen und auf dem Anzeigefeld 2 abgebildet werden. Mit der Up-Taste 4 kann jeweils die nächste Speicherstelle oder die nächste Zeile und mit der Down-Taste 5 jeweils die vorangehende Zeile ausgewählt und auf dem Anzeigefeld 2 dargestellt werden. Die Einheit 1 enthält an ihrer Unterseite weitere Kontakte 6', die mit den Kontakten 6 an der Oberseite gleichwertig sind und eine wahlweise Anbringung der Kassette 7 an der Einheit 1 an der Unterkante ermöglichen. Durch sukzessives Anwählen der einzelnen Zeilen mit der Taste 4 oder der Taste 5 können z.B. die folgenden Angaben über die aufgenommenen Titel dargestellt werden.

| lfd. Nr. | Anfangs-Datum | Anfangs-zeit | Anfangs-Bandstd. | End-Bandstd. | Titel Text |
|---|---|---|---|---|---|
| 1 | 31.12.90 | 23:00 | 0000 | 0053 | Silvester-Party |
| 2 | 31.12.90 | 23:10 | 0053 | 0065 | Onkel Ernst F. |
| 3 | 31.12.90 | 23:56 | 0066 | 0079 | Sekt-Explosion |
| 4 | 01.01.91 | 00:00 | 0082 | 0150 | Feuerwerk |
| 5 | 01.01.91 | 11:15 | 0151 | 0190 | Katerstimmung |
| 6 | 29.03.91 | 10:12 | 0195 | 0250 | Osterpaziergang |
| 7 | 29.03.91 | 20:15 | 0250 | 1910 | TV: Ben Hur |

In Fig. 2 ist die Kassette 7 mit einem Teil in eine schlitzförmige Aussparung 20 an der Einheit 1 eingesteckt. Die Aussparung 20 enthält wie in Fig. 1 die Kontakte 6, die mit den entsprechenden Kontakten 12 an der Kassette 7 zusammenwirken. Zwischen der Kassette 7 und der Einheit 1 können auch Rastmittel vorgesehen sein, um eine einwandfreie Halterung und Kontaktgabe zu gewährleisten.

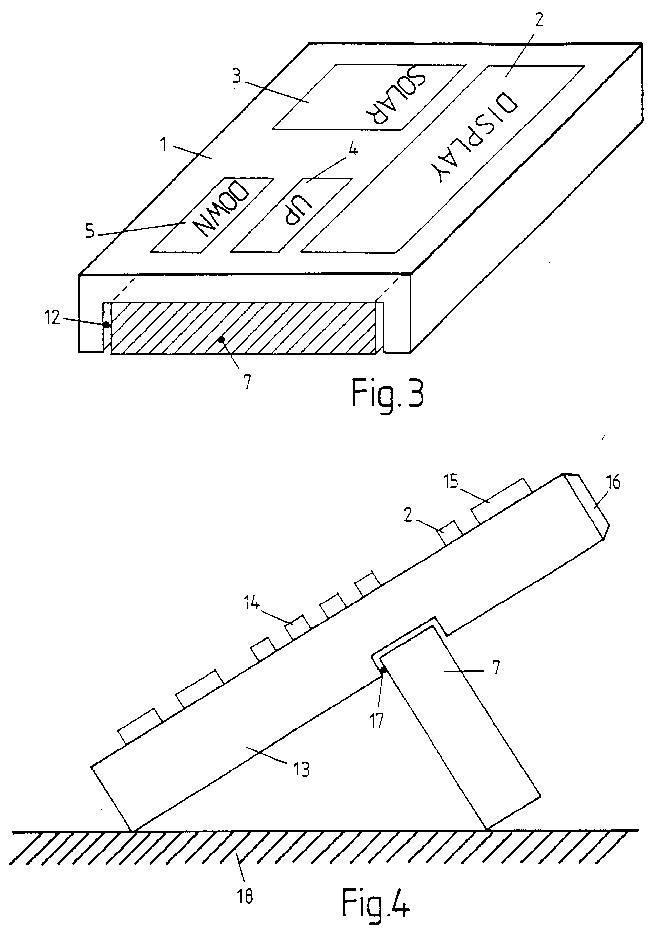

In Fig. 3 enthält die Einheit 1 an ihrer Unterseite eine Aussparung 12, die die gesamte Kassette 7 aufnehmen kann. Die Einheit 1 kann auf die Kassette 7 von oben aufgestülpt werden. Die Kontaktierung zwischen der Einheit 1 und der Kassette 7 erfolgt wie in Fig. 1 und 2.

Fig. 4 zeigt eine Fernbedieneinheit 13 mit Bedienelementen 14, einem Display 15 und einem Lichtsender 16. In die Fernbedienung 13 ist die Einheit 1 gemäß Fig. 1 - 3 zusätzlich eingebaut. Die Kassette 7 ist in eine Aussparung 17 an der Rückseite ähnlich wie in Fig. 2 einsteckbar. Die Kassette 7 dient gleichzeitig als Stütze zum pultartigen Aufstellen der Fernbedieneinheit 13 auf der Unterlage 18 im Sinne einer leichten Bedienbarkeit und Ablesbarkeit. Heutige Fernbedieneinheiten enthalten bereits die meisten elektrischen Baugruppen, die für die Basisfunktion des Lesegerätes benötigt werden, insbesondere eine Batterie-Stromversorgung, ein LCD-Display, eine Tastatur und einen Mikroprozessor. Grundsätzlich sind lediglich Verbindungsmittel zu dem elektronischen Speicher in der Kassette in die bekannte Fernbedieneinheit 13 einzufügen, um das beschriebene Lesegerät zu realisieren. Die Kombination mit der Fernbedienung ergibt noch folgenden Vorteil. Der Benutzer kann gezielt einzelne Szenen von seinem Magnetband wiedergeben, indem er nach Einlesen in den Kassettenspeicher in den Speicher der Fernbedienung nur noch eine bestimmte Tabellenzeile anwählt und den Playbefehl eingibt. Die Fernbedieneinheit würde automatisch die Anfangsadresse an das Magnetband - Abspielgerät übertragen und im Abspielgerät einen Suchlauf zu dieser Bandadresse starten.

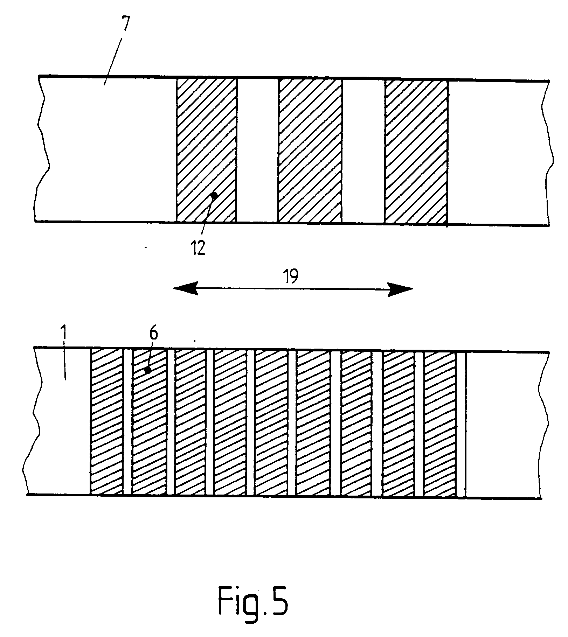

Fig. 5 zeigt eine besondere Anordnung der Kontakte 12 an der Kassette 7 und der Kontakte 6 an der Einheit 1 des Lesegerätes. An der Einheit 1 ist eine Vielzahl von Kontakten 6 angeordnet, die größer ist als die Zahl der Kontakte 12 an der Kassette 7. Diese Lösung hat folgenden Vorteil: Wenn Kassetten unterschiedlicher Größe an der Einheit 1 angebracht werden sollen, ist in manchen Fällen eine genaue Positionierung der Lage der Kassette 7 zur Einheit 1 nicht mehr gegeben. Durch eine große Zahl von Kontakten 6 kann nun erreicht werden, daß bei unterschiedlicher Lage der Kassette 7 zur Einheit 1, angedeutet durch den Doppelpfeil 19, immer eine Signalübertragung möglich ist. Die einzelnen Kontakte 6 sind den Kontakten 12 an der Kassette 7 so zugeordnet, daß ein bestimmter Kontakt 12 auch bei Verschiebung in Richtung 19 immer einen zugehörigen Kontakt 6 an der Einheit 1 trifft. Die Auswertung des richtigen Kontaktes 6 durch einen Kontakt 12 kann durch logische Auswertung des Signals oder durch Messung des Innenwiderstandes des Kontaktes 6 erfolgen.

Das Lesegerät ist so ausgebildet, daß der Bedienende durch entsprechende Bedienung von Tasten an der Einheit 1 zusätzliche beliebige Information in den Speicher 11 der Kassette 7 eingeben oder die gespeicherten Informationen ändern kann.

Die Einheit 1 kann zusätzlich einen Anschluß für einen Personal-Computer enthalten. Dann können die jeweils gespeicherten und wiedergegebenen Daten zusätzlich in dem Personal-Computer zwecks Archivierung eingegeben werden. Dadurch ist es möglich, ein beliebig großes Kassettenarchiv aufzubauen und auszuwerten.

In den Figuren wurde angenommen, daß die Signalübertragung von der Kassette 7 zu der Einheit 1 durch galvanische Kontakte erfolgt. Ebenso ist auch eine Übertragung über eine kapazitive, induktive oder optoelektronische Kopplung möglich. Die Einheit 1 kann auch mit einem Anschluß für einen Drucker versehen sein. Dann ist es möglich, die nacheinander auf dem Display dargestellten Informationen, z.B. über die aufgenommenen Titel, auszudrucken.

## Patentansprüche

1. Lesegerät für einen statischen Speicher (11) einer Kassette (7) für einen Recorder, wobei in dem Speicher (11) Kennwerte des Magnetbandes (10) wie Bandstand, aufgenommene Titel, Bandsorte, Bandlänge, Aufzeichnungsart der Vormagnetisierung gespeichert sind, und das Gerät als handliche, unabhängig vom Recorder betreibbare Einheit (1) ausgebildet ist, die eine Aufnahme für die Kassette (7) mit Kontakten (6) für den Speicher (11) aufweist und mit einem Anzeigefeld (2) für den Inhalt des Speichers (11) versehen ist, **dadurch gekennzeichnet**, daß die Aufnahme eine gegenüber der Zahl von Kontakten (12) an der Kassette (7) größere Vielzahl von Kontakten (6) aufweist, die bei mechanisch nicht eindeutig bestimmbarer Lage der Kassette (7) zu der Einheit (1) eine selbsttätige Aktivierung der jeweils benötigten Kontakte (6) durch die in der Einheit (1) enthaltene Elektronik ermöglichen.

2. Gerät nach Anspruch 1, **dadurch gekennzeichnet**, daß die Einheit (1) eine die Kontakte (6) enthaltende Öffnung (20) aufweist, in die die Kassette (7) teilweise einsteckbar ist (Fig. 2).

3. Gerät nach Anspruch 1, **dadurch gekennzeichnet**, daß die Kassette (7) in einem solchen Winkel in die Einheit (1) einsteckbar ist, daß sie im eingesteckten Zustand als Fuß oder Stütze für die Einheit dient (Fig. 4).

4. Gerät nach Anspruch 1, **dadurch gekennzeichnet**, daß die Einheit (1) an ihrer Unterseite eine die Kontakte (6) enthaltende, die Kassette (7) vollständig aufnehmende Öffnung (12) aufweist, durch die die Einheit (1) auf die Kassette (7) aufstülpbar ist (Fig. 3).

5. Gerät nach Anspruch 1, **dadurch gekennzeichnet**, daß die Einheit (1) mit der Fernbedieneinheit (13) für einen Recorder, Fernsehempfänger oder dgl.zu einer Baueinheit vereinigt ist (Fig. 4).

6. Gerät.nach Anspruch 1, **dadurch gekennzeichnet**, daß die Einheit (1) Bedienmittel aufweist, durch die der Inhalt des Speichers (11) veränderbar ist.

7. Gerät nach Anspruch 1, **dadurch gekennzeichnet**, daß die Einheit (1) an verschiedenen Seiten gleichwertige Aufnahmen mit Kontakten (6) für die Kassette (7) aufweist (Fig. 1).

8. Gerät nach Anspruch 1, **dadurch gekennzeichnet**, daß die Kontakte eine galvanische, kapazitive, induktive oder optoelektronische Übertragung der Signale bewirken.

9. Gerät nach Anspruch 1, **dadurch gekennzeichnet**, daß die Einheit (1) einen Anschluß für einen Personal-Computer oder Drucker zur Übernahme von Daten aufweist.

## Claims

1. Reading device for a static memory (11) of a cassette (7) for a recorder whereby identification characteristics of the magnetic tape (10) such as tape position, recorded titles, type of tape, length of tape, recording mode of premagnetization are stored in the memory (11), and in which the device is constructed as a handy unit (1) which can be operated independently of the recorder and which comprises a receptacle for the cassette (7) with contacts (6) for the memory (11) and is provided with a display field (2) for the contents of the memory (11), characterised in that the receptacle comprises a multiplicity of contacts (6) the number of which is increased with respect to the number of contacts (12) on the cassette (7), enabling automatic activation of the respectively needed contacts (6) by means of the electronic circuitry contained in the unit (1) in case the position of the cassette (7) cannot be unambiguously defined mechanically.

2. Device according to claim 1, characterised in that the unit (1) is provided with an opening (20) containing the contacts (6) into which the cassette (7) can be partially inserted (Fig.2).

3. Device according to claim 1, characterised in that the cassette (7) can be inserted into the unit (1) at such an angle that it serves, in the inserted position, as pedestal or prop for the unit (Fig.4).

4. Device according to claim 1, characterised in that the unit (1) is provided, at its bottom side, with an opening (12) containing the contacts (6) and accommodating the cassette (7), entirely through which opening the unit (1) can be slid over the cassette (7) (Fig.3).

5. Device according to claim 1, characterised in that the unit (1) is unified with the remote control unit (13) for a recorder, television receiver or similar to form one component unit (Fig.4).

6. Device according to claim 1, characterised in that the unit (1) comprises operating means by means of which the contents of the memory (11) can be altered.

7. Device according to claim 1, characterised in that the unit (1) comprises equivalent receptacles with contacts (6) for the cassette (7) at different sides (Fig.1).

8. Device according to claim 1, characterised in that the contacts cause a conductive, capacitive, inductive or opto-electronic transmission of the signals.

9. Device according to claim 1, characterised in that the unit (1) comprises a connection for a personal computer or printer for the reception of data.

## Revendications

1. Dispositif de lecture de mémoire statique (11) d'une cassette (7) pour un enregistreur, dans lequel sont mémorisées des valeurs caractéristiques de la bande magnétique (10) telles que position de la bande, titres enregistrés, type de bande, longueur de bande, mode d'enregistrement de la prémagnétisation, ledit dispositif étant conçu comme une unité (1) maniable, utilisable indépendamment de l'enregistreur et présentant un dispositif de réception pour la cassette (7) avec des contacts (6) pour la mémoire (11) et comportant une zone d'affichage (2) pour le contenu de la mémoire (11), **caractérisé en ce que** le réceptacle présente un nombre de contacts (6) plus grand que le nombre de contacts (12) de la cassette (7) qui, en cas de positionnement de la cassette (7) par rapport à l'unité (1) ne pouvant être déterminé mécaniquement avec précision, permet l'activation automatique des contacts (6) nécessaires par l'électronique contenue dans l'unité (1).

2. Dispositif selon la revendication 1, **caractérisé en ce que** l'unité (1) présente une ouverture (20) contenant les contacts (6) et dans laquelle la cassette (7) peut être partiellement insérée (fig. 2).

3. Dispositif selon la revendication 1, **caractérisé en ce que** la cassette (7) est insérable dans l'unité (1) avec un angle tel qu'à l'état inséré, elle sert de pied ou de support à l'unité (fig. 4).

4. Dispositif selon la revendication 1, **caractérisé en ce que** l'unité (1) présente à sa face inférieure une ouverture (12) contenant les contacts (6), dans laquelle la cassette (7) peut être entièrement insérée et par laquelle l'unité (1) peut être enfoncée dans la cassette (7) (fig. 3).

5. Dispositif selon la revendication 1, **caractérisé en ce que** l'unité (1) forme un ensemble avec la télécommande (13) d'un enregistreur, d'un téléviseur ou d'un autre Dispositif similaire (fig. 4).

6. Dispositif selon la revendication 1, **caractérisé en ce que** l'unité (1) présente des éléments de commande permettant de modifier le contenu de la mémoire (11).

7. Dispositif selon la revendication 1, **caractérisé en ce que** l'unité (1) présente sur différentes faces des dispositifs de réception identiques avec des contacts (6) pour la cassette (7) (fig. 1).

8. Dispositif selon la revendication 1, **caractérisé en ce que** les contacts réalisent une transmission directe, capacitive, inductive ou optoélectronique des signaux.

9. Dispositif selon la revendication 1, **caractérisé en ce que** l'unité (1) comporte un raccord d'ordinateur personnel ou d'imprimante pour l'édition des données.

Fig.1

Fig.2

Fig.3

Fig.4

Fig.5